(19) Europäisches Patentamt / European Patent Office / Office européen des brevets

(11) **EP 2 485 543 A1**

(12) **EUROPEAN PATENT APPLICATION**
published in accordance with Art. 153(4) EPC

(43) Date of publication:
**08.08.2012 Bulletin 2012/32**

(51) Int Cl.:
*H04W 52/24* (2009.01)     *H04W 84/10* (2009.01)

(21) Application number: **10820723.4**

(86) International application number:
**PCT/JP2010/067282**

(22) Date of filing: **01.10.2010**

(87) International publication number:
**WO 2011/040609 (07.04.2011 Gazette 2011/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2009 JP 2009231030**
**02.11.2009 JP 2009251666**

(71) Applicant: **Kyocera Corporation**
**Kyoto-shi, Kyoto 612-8501 (JP)**

(72) Inventors:
• **NAKAMURA, Kazutaka**
  **Yokohama-shi**
  **Kanagawa 224-8502 (JP)**
• **JOKO, Shingo**
  **Yokohama-shi**
  **Kanagawa 224-8502 (JP)**

(74) Representative: **Schwabe - Sandmair - Marx**
**Patentanwälte**
**Stuntzstraße 16**
**81677 München (DE)**

(54) **WIRELESS COMMUNICATION SYSTEM, LARGE CELL BASE STATION AND COMMUNICATION CONTROL METHOD**

(57)     A large cell base station (100) calculates a small cell base station interference ratio, defined as the ratio of the RSRP (small cell base station→large cell terminal), which is the interference received from a small cell base station (300) relative to I (large cell terminal), which is the value regarded as the total interference received by a radio terminal (200) connected to the large cell base station (100). When the small cell base station interference ratio is greater than or equal to a threshold ($\alpha$), the large cell base station (100) sets a transmission power adjustment rate so that the SINR in the radio terminal (200) is a predetermined decibel value $\beta$[dB] or greater, and transmits the rate to the small cell base station (300).

FIG. 2

EP 2 485 543 A1

**Description**

**TECHNICAL FIELD**

The present invention relates to a radio communication system, in which a small cell base station forming a small cell smaller than a large cell formed by a large cell base station is installed in the large cell and a radio terminal is connected to the large cell base station, and relates also to a large cell base station, and a communication control method.

**BACKGROUND ART**

As the next-generation radio communication system for performing high speed communication with high capacity, as compared with the 3rd-generation and 3.5th-generation radio communication systems operated at present, an LTE has been standardized by 3GPP, which is a group aiming to standardize a radio communication system. The technical specifications of the LTE have been specified as 3GPP Release 8, and Release 9, which is an upgrade version of Release 8, and an LTE Advanced, which is a sophisticated version of the LTE, have been currently considered.

Furthermore, in the LTE Release 9, a cell (referred to as a "small cell"), which is a communication area having a radius of about several meters [m] to some dozen meters [m], is formed, and detailed functions and conditions of a small cell base station (Home eNodeB), which is a small base station installable in an indoor space, have been standardized. The small cell base station is installed in order to distribute traffic of a large cell base station (Macro eNodeB), which forms a cell (a large cell), or cover a dead zone in the large cell, wherein the large cell is a communication area having a radius of about several hundred meters.

Meanwhile, when the small cell base station is installed in the large cell, a downlink from the small cell base station to a radio terminal connected to the small cell base station may cause interference to a radio terminal connected to a large cell base station. In order to suppress the interference, a downlink transmission control method for the small cell base station has been proposed.

For example, in a method disclosed in Non-Patent Document 1, (1) A small cell base station measures RSRP (Reference Signal Received Power) of a reference signal from the closest large cell base station and SINR (Signal to Interference and Noise Ratio). Here, the closest large cell base station indicates a large cell base station corresponding to the largest RSRP measured in the small cell base station. (2) Next, the small cell base station controls the downlink transmission power of the small cell base station such that the SINR in a large cell terminal is equal to or more than x [dB] (unit: decibel), on the assumption that a radio terminal (a large cell terminal) connected to the large cell base station exists in a place remote, by y [dB], from the small cell base station in the direction away from the large cell base station. (3) If the SINR in the large cell terminal is not equal to or more than the x [dB], the small cell base station reduces the downlink transmission power to a minimum value z [dBm]. Then, the operations after (1) are repeated. In addition, the x, y, and z are control variables and have values determined by a system.

Furthermore, in a method disclosed in Non-Patent Document 2, (1) A large cell base station detects a large cell terminal having approached a small cell base station. Specifically, the large cell base station determines that a large cell terminal satisfying PL (small cell base station → large cell terminal) < r [dB] is located in the vicinity of the small cell base station. Here, the PL (small cell base station → large cell terminal) indicates propagation loss (path loss: includes distance attenuation, shadowing loss, and feature pass loss) from the small cell base station to the large cell terminal. The r is a control variable and has values determined by a system. (2) Next, the large cell base station notifies the small cell base station of whether the large cell terminal is located in the vicinity of the small cell base station via a network. (3) The small cell base station having received the notification sets downlink transmission power to a small value determined in advance when the large cell terminal is located in the vicinity of the small cell base station. Meanwhile, when the large cell terminal is not located in the vicinity of the small cell base station, the small cell base station having received the notification sets the downlink transmission power to a large value determined in advance.

**PRIOR ART DOCUMENT**

**NON-PATENT DOCUMENT**

Non-Patent Document 1: 3GPP RAN-WG4 R4-093146, "HeNB DL Performance with Adaptive Power", Qualcomn Europe.
Non-Patent Document 2: 3GPP RAN-WG4 R4-092063, "Analysis of HNB Coverage and HNB Interference to Macro UE for Enhanced Interference Management", Qualcomm Europe, NTT DOCOMO and Vodafone Group.

## SUMMARY OF THE INVENTION

### PROBLEMS TO BE SOLVED BY THE INVENTION

However, in the method disclosed in the Non-Patent Document 1, the small cell base station controls the downlink transmission power regardless of whether the large cell terminal receives non-ignorable interference from the small cell base station. Therefore, even when the large cell terminal does not receive the non-ignorable interference from the small cell base station, it is probable that the small cell base station reduces the downlink transmission power, and the communication speed of the small cell base station may be reduced more than necessary.

Furthermore, in the method disclosed in the Nan-Patent Document 2, it is possible for the small cell base station to recognize whether the large cell terminal is located in the vicinity of the small cell base station via the network. Consequently, according to the method disclosed in the Non-Patent Document 2, it is possible for the small cell base station to effectively perform the downlink transmission power control, as compared with the method disclosed in the Non-Patent Document 1. However, whether the large cell terminal receives the non-ignorable interference from the small cell base station is not considered. Therefore, even when the small cell base station does not cause interference to the large cell terminal, it is probable that the small cell base station reduces the transmission power more than necessary. Meanwhile, when the small cell base station causes significant interference to the large cell terminal, it is preferable that the small cell base station further reduces the transmission power, but such control is not performed.

Therefore, the present invention has been achieved in view of the above-described problems, and an object thereof is to provide a radio communication system capable of appropriately reducing interference caused by a small cell base station to a radio terminal connected to a large cell base station, a large cell base station, and a communication control method.

To solve the above problem, the present invention has following features. A first feature of the present invention is summarized as a radio communication system (radio communication system 1) in which a small cell base station (small cell base station300a, 300b) forming a small cell (FC1, FC2) smaller than a large cell (MC1) formed by a large cell base station (large cell base station 100) is installed in the large cell and a radio terminal (radio terminal 200) is connected to the large cell base station, wherein a network device including at least one of the large cell base station and an upper device of the large cell base station comprises: a ratio acquisition unit (ratio acquisition unit 121) configured to acquire a ratio of an interference amount received from the small cell base station with respect to a first interference amount regarded as a total amount of interference received by the radio terminal; and an instruction unit (transmission power instruction unit 122) configured to give an instruction for controlling transmission power of a small cell downlink, which is a downlink in the small cell base station, to the small cell base station based on the ratio acquired by the ratio acquisition unit.

In the radio communication system as described above, the network device acquires the ratio of the interference amount received from the small cell base station with respect to the first interference amount regarded as the total amount of interference received by the radio terminal connected to the large cell base station, based on the ratio, and gives the instruction for controlling transmission power to the small cell base station. In this way, in the radio terminal connected to the large cell base station, when the ratio of the interference amount received from the small cell base station with respect to the first interference amount is large and the interference received from the small cell base station is not ignorable, the transmission power of the small cell downlink in the small cell base station is reduced. Meanwhile, when the ratio of the interference amount received from the small cell base station with respect to the first interference amount is small and the interference received from the small cell base station is ignorable, the transmission power of the small cell downlink in the small cell base station is maintained or increased. Consequently, it is possible to appropriately reduce the interference from the small cell base station to the radio terminal connected to the large cell base station without reducing the communication quality of the small cell base station more than necessary.

A second feature of the present invention is summarized as that the instruction unit gives the instruction for controlling the transmission power of the small cell downlink to the small cell base station such that communication quality of a downlink from the large cell base station to the radio terminal reaches a predetermined value.

A third feature of the present invention is summarized as that the instruction unit gives an instruction for reducing the downlink transmission power to the small cell base station, when the ratio acquired by the ratio acquisition unit exceeds a predetermined threshold value.

A fourth feature of the present invention is summarized as that the ratio acquisition unit acquires received power of a reference signal from the small cell base station in the radio terminal, and acquires a ratio of the received power of the reference signal with respect to the first interference amount.

A fifth feature of the present invention is summarized as that the ratio acquisition unit calculates the first interference amount by adding thermal noise power to received power of a reference signal in the radio terminal, the reference signal transmitted from the small cell base station and a large cell base station other than the large cell base station to which the radio terminal has been connected.

A sixth feature of the present invention is summarized as that the ratio acquisition unit calculates the first interference amount by dividing received power of a reference signal from the large cell base station in the radio terminal by a signal to noise power ratio corresponding to CQI from the radio terminal.

A seventh feature of the present invention is summarized as that the ratio acquisition unit calculates the first interference amount by dividing transmission power density of a large cell downlink, which is a downlink in the large cell base station, by propagation loss of the large cell downlink, and further dividing a divided result by a signal to noise power ratio corresponding to CQI from the radio terminal.

An eighth feature of the present invention is summarized as the radio communication system, comprising: a specifying unit configured to specify a transmission delay time of a signal from the instruction unit to the small cell base station; and an assignment unit configured to assign a radio resource to the radio terminal after the transmission delay time, from the instruction for controlling the transmission power of the small cell downlink to the small cell base station is made by the instruction unit, has elapsed..

A ninth feature of the present invention is summarized as that the specifying unit specifies the transmission delay time based on a duration between a transmission of a predetermined signal to the small cell base station and a reception of a response signal from the small cell base station.

A tenth feature of the present invention is summarized as that the specifying unit corrects the transmission delay time based on a reception interval of a signal which is periodically transmitted from the small cell base station.

An eleventh feature of the present invention is summarized as that the specifying unit specifies the transmission delay time based on a change in CQI which is transmitted from the radio terminal when the small cell base station controls the transmission power of the small cell downlink.

A twelfth feature of the present invention is summarized as that the instruction unit transmits any one of a value of maximum transmission power of the small cell base station and a variable for determining the maximum transmission power of the small cell base station, to the small cell base station.

A thirteenth feature of the present invention is summarized as a large cell base station forming a large cell, a small cell base station forming a small cell smaller than the large cell being installed in the large cell, a radio terminal being connected to the large cell base station, the large cell base station comprising: a ratio acquisition unit configured to acquire a ratio of an interference amount received from the small cell base station with respect to a first interference amount regarded as a total amount of interference received by the radio terminal; and an instruction unit configured to give an instruction for controlling transmission power of a small cell downlink, which is a downlink in the small cell base station, to the small cell base station based on the ratio acquired by the ratio acquisition unit.

A fourteenth feature of the present invention is summarized as a communication control method in a large cell base station forming a large cell, a small cell base station forming a small cell smaller than the large cell being installed in the large cell, a radio terminal being connected to the large cell base station, the communication control method comprising: a step of acquiring, by the large cell base station, a ratio of an interference amount received from the small cell base station with respect to a first interference amount regarded as a total amount of interference received by the radio terminal; and a step of giving, by the large cell base station, an instruction for controlling transmission power of a small cell downlink, which is a downlink in the small cell base station, to the small cell base station based on the acquired ratio.

According to the characteristics of the present invention, it is possible to provide a radio communication system capable of appropriately reducing interference caused by a small cell base station to a radio terminal connected to a large cell base station, a large cell base station, and a communication control method.

**BRIEF DESCRIPTION OF THE DRAWINGS**

[Fig. 1] Fig. 1 is a diagram showing the entire schematic configuration of a radio communication system according to an embodiment of the present invention.

[Fig. 2] Fig. 2 is a block diagram illustrating the configuration of a large cell base station according to the embodiment of the present invention.

[Fig. 3] Fig. 3 is a sequence diagram illustrating a first operation example of a radio communication system according to the embodiment of the present invention.

[Fig. 4] Fig. 4 is a sequence diagram illustrating a second operation example of the radio communication system according to the embodiment of the present invention.

[Fig. 5] Fig. 5 is a sequence diagram illustrating a third operation example of the radio communication system according to the embodiment of the present invention.

[Fig. 6] Fig. 6 is a block diagram illustrating the configuration of a large cell base station according to another embodiment of the present invention.

## MODES FOR CARRYING OUT THE INVENTION

Hereinafter, an embodiment of the present invention will be described with reference to the accompanying drawings. Specifically, (1) Configuration of radio communication system, (2) Operation of radio communication system, (3) Operation and effect, and (4) Other embodiments will be described. In all drawings for explaining the following embodiments, the same or similar reference numerals are used to designate the same or similar elements.

(1) Configuration of radio communication system

(1. 1) Entire schematic configuration of radio communication system

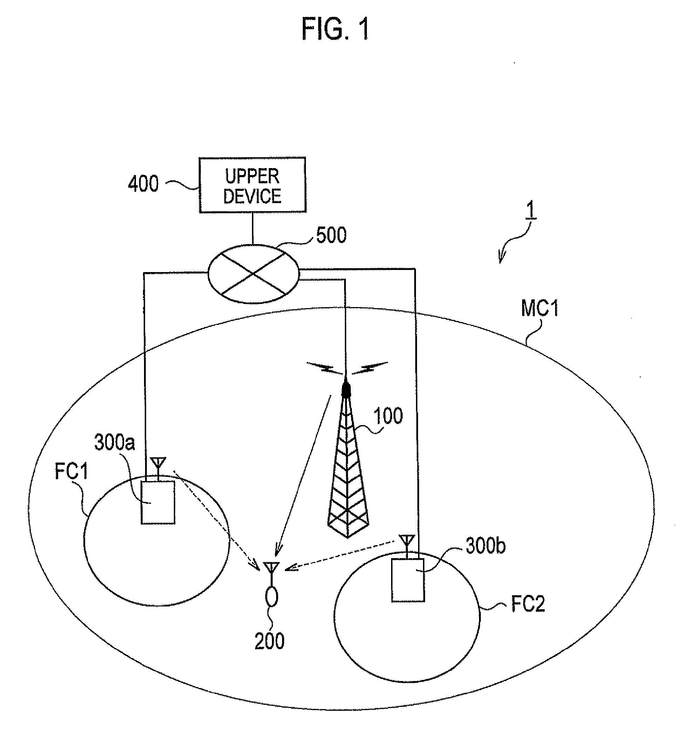

Fig. 1 is a diagram showing the entire schematic configuration of a radio communication system 1 according to an embodiment of the present invention. The radio communication system 1, for example, has a configuration based on the LTE Release 9 which is a 3.9th-generation (3.9G) cellular phone system, or the LTE-Advanced positioned as a 4th-generation (4G) cellular phone system.
As illustrated in Fig. 1, the radio communication system 1 includes a large cell base station (for example, a macro cell base station) 100 forming a large cell (for example, a macro cell) MC1, and small cell base stations (for example, femto cell base stations or pico cell base stations) 300a and 300b forming small cells (for example, femto cells or pico cells) FC1 and FC2, respectively. A radius of the large cell MC1, for example, is about several hundred meters [m], and radiuses of the small cells FC1 and FC2, for example, are about several meters [m] to some dozen meters [m]. A radio terminal 200 is connected to the large cell base station 100.
Hereinafter, the small cells FC1. and FC2 will be simply referred to as a "small cell FC" when they are not distinguished from each other, and the small cell base stations 300a and 300b will be simply referred to as a "small cell base station 300" when they are not distinguished from each other.
The large cell base station 100 is installed at a place based on the base station design in which a communication provider has considered inter-cell interference. Meanwhile, the small cell base station 300 is configured to be small enough to be installed at an arbitrary place (specifically, in an indoor space) by a user. The small cell base station 300 is installed in the large cell MC1 in order to distribute the traffic of the large cell base station 100, or cover a dead zone in the large cell MC1.
The large cell base station 100 is connected to a core network 500 via a dedicated line. Meanwhile, the small cell base station 300 is connected to the core network 500 of a communication provider via a general public line such as ADSL or FTTH. Furthermore, an upper device 400 such as MME (Mobility Management Entity) is connected to the core network 500.
When a frequency band of a downlink (a link from the large cell base station 100 to the radio terminal 200, and will be hereinafter referred to as a "large cell downlink") used in the communication in the case in which the large cell base station 100 and the radio terminal 200 are connected to each other to perform communication is equal to a frequency band of a downlink (a link from the small cell base station 300 to a radio terminal (not illustrated), and will be hereinafter referred to as a "small cell downlink") used in the communication in the case in which the small cell base station 300 and the radio terminal (not illustrated) are connected to each other to perform communication, the radio terminal 200 communicating with the large cell base station 100 receives interference by a radio signal transmitted using the downlink from the small cell base station 300 to the radio terminal (not illustrated).
In the present embodiment, as described above, when the radio terminal 200 receives interference from the small cell base station 300, the large cell base station 100 controls the downlink transmission power of the small cell base station 300 to reduce the interference.

(1.2) Configuration of large cell base station

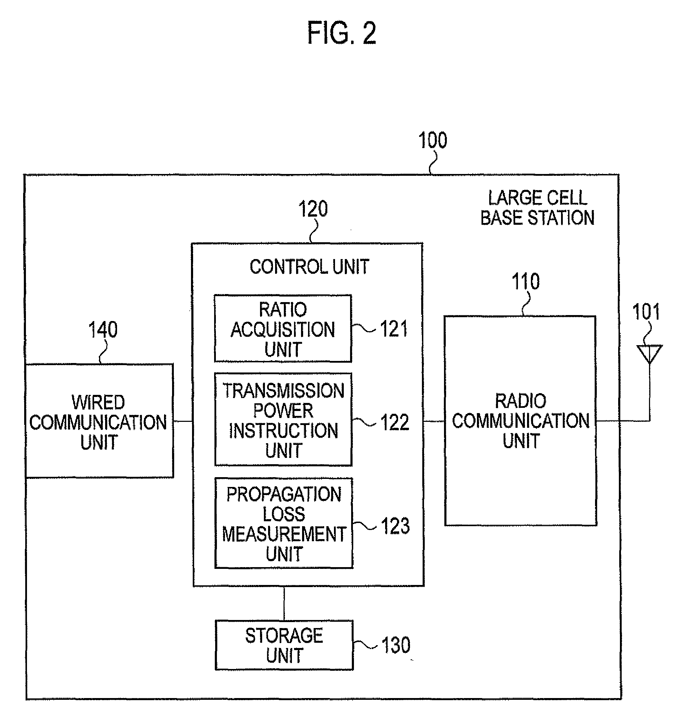

Fig. 2 is a block diagram illustrating the configuration of the large cell base station 100. As illustrated in Fig. 2, the large cell base station 100 includes an antenna unit 101, a radio communication unit 110, a control unit 120, a storage unit 130, and a wired communication unit 140.
The radio communication unit 110 is, for example, configured by using a radio frequency (RF) circuit and a base band (BB) circuit, and transmits and receives radio signals via the antenna unit 101. Furthermore, the radio communication unit 110 encodes and modulates the transmission signal, and demodulates and decodes the reception signal.
The radio communication unit 110 receives information for obtaining the total amount of interference, which is received by the radio terminal 200, from the radio terminal 200. Here, the information for obtaining the total amount of interference received by the radio terminal 200 includes CQI (Channel Quality Indicator), received power of a reference signal from the small cell base station 300 (hereinafter, referred to "RSRP (small cell base station → large cell terminal)") in the radio terminal 200, received power of a reference signal from the large cell base station 100 to which the radio terminal 200 has been connected (hereinafter, referred to "RSRP (large cell base station → large cell terminal)") in the radio terminal 200, and received power of a reference signal from a large cell base station to which the radio terminal 200 has not been connected (hereinafter, referred to "RSRP (another large cell base station → large cell terminal)") in the radio terminal 200, that is, a large cell base station (hereinafter, referred to "another large cell base station") other than the large cell base station 100.

In addition, the RSRP (small cell base station → large cell terminal) is also used as information indicating the interference amount by which the radio terminal 200 is received from the small cell base station 300. Furthermore, the RSRP (small cell base station → large cell terminal) is measured in each small cell base station 300 which is a transmission source of the reference signal in the radio terminal 200, and includes an ID indicating identification information of a corresponding small cell base station 300. Moreover, the RSRP (another large cell base station → large cell terminal) is measured in each another large cell base station which is a transmission source of the reference signal in the radio terminal 200.

The control unit 120, for example, is configured by using a CPU, and controls various functions of the large cell base station 100. The storage unit 130, for example, is configured by using a memory, and stores various types of information used for the control and the like of the large cell base station 100. The wired communication unit 140 communicates with the another large cell base station or the small cell base station 300 via the core network 500.

The control unit 120 includes a ratio acquisition unit 121, a transmission power instruction unit 122, and a propagation loss measurement unit 123.

The ratio acquisition unit 121 acquires the CQI, the RSRP (small cell base station → large cell terminal), the RSRP (large cell base station → large cell terminal), and the RSRP (another large cell base station → large cell terminal) which have been received in the radio communication unit 110.

Next, the ratio acquisition unit 121 calculates I (large cell terminal) which indicates a value regarded as the total amount of interference received by the radio terminal 200. In order to calculate the I (large cell terminal), the following first to third techniques are used.

In the first technique, the ratio acquisition unit 121 calculates the sum value of the RSRP (small cell base station → large cell terminal) and the RSRP (another large cell base station → large cell terminal).

Next, the ratio acquisition unit 121 adds a thermal noise power value determined in advance to the sum value of the RSRP (small cell base station → large cell terminal) and the RSRP (another large cell base station → large cell terminal), thereby obtaining the I (large cell terminal). Here, the thermal noise power value is stored in the storage unit 130. Otherwise, the thermal noise power value is transmitted from the radio terminal 200.

In the second technique, the ratio acquisition unit 121 calculates SINR (Signal to Interference and Noise Ratio) corresponding to the large cell downlink in the radio terminal 200 based on the CQI. Next, the ratio acquisition unit 121 divides the RSRP (large cell base station → large cell terminal) by the SINR, thereby obtaining the I (large cell terminal).

In the third technique, the ratio acquisition unit 121 calculates SINR corresponding to the large cell downlink in the radio terminal 200 based on the CQI.

Here, when the large cell base station 100 and the radio terminal 200 are connected to each other to perform communication, the propagation loss measurement unit 123 measures propagation loss (hereinafter, referred to as "uplink propagation loss") of an uplink (a link from the radio terminal 200 to the large cell base station 100, and will be hereinafter referred to as a "large cell uplink") used in the communication. Here, the propagation loss includes distance attenuation, shadowing loss, and feature pass loss.

The ratio acquisition unit 121 acquires the uplink propagation loss measured by the propagation loss measurement unit 123. Moreover, the ratio acquisition unit 121 estimates propagation loss (hereinafter, referred to as "downlink propagation loss") PL of a large cell downlink from the uplink propagation loss. For example, the ratio acquisition unit 121 regards the uplink propagation loss as the downlink propagation loss. Furthermore, the ratio acquisition unit 121 regards a value obtained by adding a predetermined correction value to the uplink propagation loss as the downlink propagation loss.

Next, the ratio acquisition unit 121 acquires transmission power density (hereinafter, referred to as "downlink transmission power density") P of a large cell downlink in the large cell base station 100. For example, the downlink transmission power density P is stored in the storage unit 130. Moreover, the ratio acquisition unit 121 divides the downlink transmission power density P by the downlink propagation loss PL, and further divides a value, which is obtained by the division, by the SINR, thereby obtaining the I (large cell terminal).

Through the above-mentioned first to third techniques, after the I (large cell terminal) is calculated, the ratio acquisition unit 121 divides the RSRP (small cell base station → large cell terminal) by the I (large cell terminal), thereby calculating a ratio (hereinafter, referred to as a "small cell base station interference amount ratio") of an interference amount, which is received by the radio terminal 200 from the small cell base station 300 and corresponds to the RSRP (small cell base station → large cell terminal), with respect to the total amount of interference received by the radio terminal 200. Here, when a plurality of RSRPs (small cell base station → large cell terminal) are acquired, in other words, when the radio terminal 200 receives interference from a plurality of small cell base stations 300, the ratio acquisition unit 121 divides the RSRPs (small cell base station → large cell terminal) by the I (large cell terminal) for each RSRP (small cell base station → large cell terminal) corresponding to each small cell base station 300, thereby calculating the small cell base station interference amount ratio for each small cell base station 300.

The transmission power instruction unit 122 determines whether the calculated small cell base station interference amount ratio is equal to or more than a threshold value $\alpha$. Here, the threshold value $\alpha$ is a real value from 0 to 1, and is determined in advance in the radio communication system 1 and stored in the storage unit 130.

When the small cell base station interference amount ratio is equal to or more than the threshold value $\alpha$, it is regarded that the radio terminal 200 receives non-ignorable interference from the small cell base station 300 corresponding to the small cell base station interference amount ratio. In this case, the transmission power instruction unit 122 sets an adjustment rate (hereinafter, referred to as a "transmission power adjustment rate") for adjusting the transmission power of the small cell downlink in the small cell base station 300 such that the SINR in the radio terminal 200 is equal to or more than $\beta$ [dB] which is a predetermined decibel value.

Specifically, the transmission power instruction unit 122 uses the RSRP (large cell base station → large cell terminal), which is received in the radio communication unit 110, as S (large cell terminal) which is received in the radio terminal 200 and indicates the received power of a signal from the large cell base station 100. Otherwise, the transmission power instruction unit 122 uses a value obtained by dividing the transmission power of the large cell base station 100 by the downlink propagation loss as the S (large cell terminal).

Here, the SINR corresponding to the large cell downlink in the radio terminal 200 is calculated by the S (large cell terminal)/the I (large cell terminal). Thus, the transmission power instruction unit 122 determines Y satisfying Equation below as the transmission power adjustment rate.

[Equation 1]

$$\frac{S \text{ (large cell terminal)}}{I \text{ (large cell terminal)} + (\gamma - 1) \times RSRP \text{ (small cell base station} \rightarrow \text{large cell terminal)}} \geq \beta$$

When the Y satisfying Equation above does not exist, the transmission power instruction unit 122 sets the transmission power adjustment rate to zero. Furthermore, the $\beta$ [dB] is determined in advance in the radio communication system 1 and stored in the storage unit 130. Moreover, the transmission power instruction unit 122 transmits the transmission power adjustment rate to the small cell base station 300 corresponding to the small cell base station interference amount ratio used in the calculation of the transmission power adjustment rate via the wired communication unit 140 and the core network 500.

Meanwhile, when the small cell base station interference amount ratio is smaller than the threshold value $\alpha$, it is regarded that the radio terminal 200 does not receive non-ignorable interference from the small cell base station 300 corresponding to the small cell base station interference amount ratio. In this case, the transmission power instruction unit 122 sets a transmission power adjustment rate having a value of 1 or more, and transmits the transmission power adjustment rate to a corresponding small cell base station 300 via the wired communication unit 140 and the core network 500.

In addition, when the radio terminal 200 receives interference from a plurality of small cell base stations 300, RSRPs (small cell base station → large cell terminal) corresponding to the plurality of small cell base stations 300 are thus acquired, and the small cell base station interference amount ratio is calculated for each small cell base station 300, the transmission power instruction unit 122 sets the transmission power adjustment rate for each small cell base station 300. In this case, the small cell base station 300 serving as a transmission destination of the transmission power adjustment rate is specifiable by the ID of the RSRP (small cell base station → large cell terminal) corresponding to the small cell base station 300.

If the transmission power adjustment rate is received from the transmission power instruction unit 122, the small cell base station 300 multiplies a value of the transmission power of the small cell downlink at that time point by the transmission power adjustment rate, and sets a value obtained by the multiplication as a value of the transmission power of a new small cell downlink.

In addition, when a plurality of transmission power adjustment rates have been received from the large cell base station 100 in a past predetermined period, the small cell base station 300 may multiply a value of the transmission power of the small cell downlink at that time point by the smallest transmission power adjustment rate of the plurality of transmission power adjustment rates, and set a value obtained by the multiplication as a value of the transmission power of a new small cell downlink. Furthermore, when transmission power adjustment rates are received from the large cell base station 100 and the transmission power adjustment rates are also received from another large cell base station (not illustrated), the small cell base station 300 may multiply a value of the transmission power of the small cell downlink at that time point by the smallest transmission power adjustment rate of the plurality of transmission power adjustment rates, and set a value obtained by the multiplication as a value of the transmission power of a new small cell downlink.

However, when the calculated value of the transmission power of the new small cell downlink exceeds an upper limit value, the small cell base station 300 sets the value of the transmission power of the new small cell downlink as the upper limit value. Meanwhile, when the calculated value of the transmission power of the new small cell downlink becomes less than a lower limit value, the small cell base station 300 sets the value of the transmission power of the new small cell downlink as the lower limit value.

(2) Operation of radio communication system

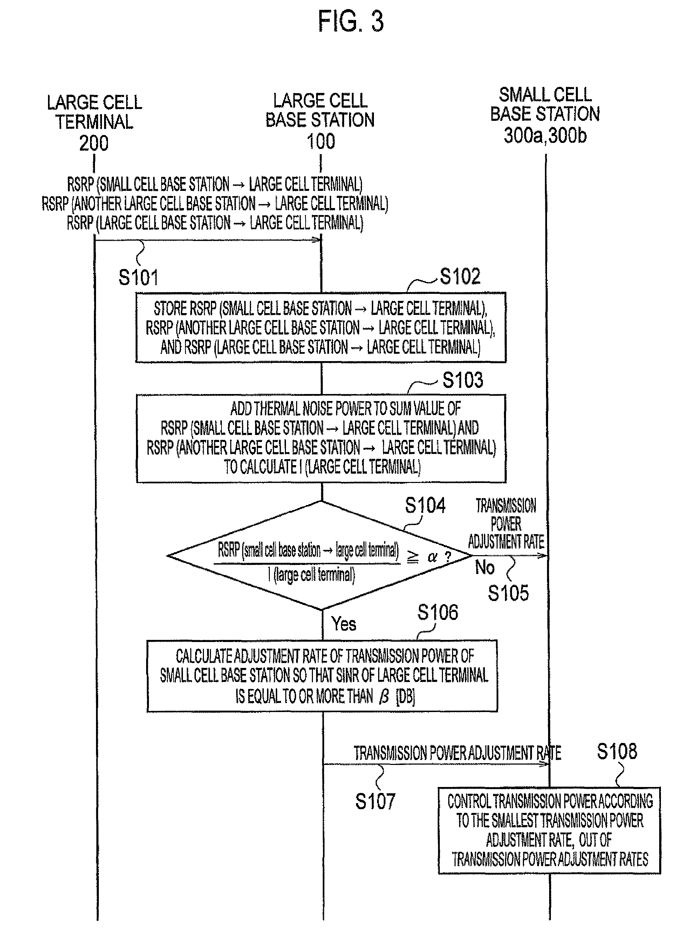

Next, the operation of the radio communication system 1 will be described. Fig. 3 is a sequence diagram illustrating a first operation example of the radio communication system 1.

In step S101, the radio terminal 200 connected to the large cell base station 100 measures the RSRP (small cell base station → large cell terminal), the RSRP (another large cell base station → large cell terminal), and the RSRP (large cell base station → large cell terminal), and transmits the measured RSRPs to the large cell base station 100. The large cell base station 100 receives the RSRP (small cell base station → large cell terminal), the RSRP (another large cell base station → large cell terminal), and the RSRP (large cell base station → large cell terminal) from the radio terminal 200.

In step S102, the large cell base station 100 stores the received RSRP (small cell base station → large cell terminal), RSRP (another large cell base station → large cell terminal), and RSRP (large cell base station → large cell terminal). Moreover, in step S103, the large cell base station 100 calculates the sum value of the RSRP (small cell base station → large cell terminal) and the RSRP (another large cell base station → large cell terminal), and calculates the I (large cell terminal) by adding a thermal noise power value to the sum value.

In step S104, the large cell base station 100 divides the RSRP (small cell base station → large cell terminal) by the I (large cell terminal) to calculate the small cell base station interference amount ratio, and further determines whether the small cell base station interference amount ratio is equal to or more than the threshold value $\alpha$.

When the small cell base station interference amount ratio is smaller than the threshold value $\alpha$, the large cell base station 100 transmits a transmission power adjustment rate having a value of 1 or more to a corresponding small cell base station 300 in step S104.

Meanwhile, when the small cell base station interference amount ratio is equal to or more than the threshold value $\alpha$, the large cell base station 100 calculates the transmission power adjustment rate such that the SINR in the radio terminal 200 is equal to or more than the $\beta$ [dB] in step S106. Moreover, in step S107, the large cell base station 100 transmits the calculated transmission power adjustment rate to the corresponding small cell base station 300.

In any one of step S106 and step S107, the small cell base station 300 receives the transmission power adjustment rate. In step S108, the small cell base station 300 multiplies a value of the transmission power of the small cell downlink at that time point by a plurality of transmission power adjustment rates received from the large cell base station 100 in a past predetermined period, or the smallest transmission power adjustment rate of a plurality of transmission power adjustment rates received from the large cell base station 100 and another large cell base station (not illustrated), and sets a value obtained by the multiplication as a value of the transmission power of a new small cell downlink.

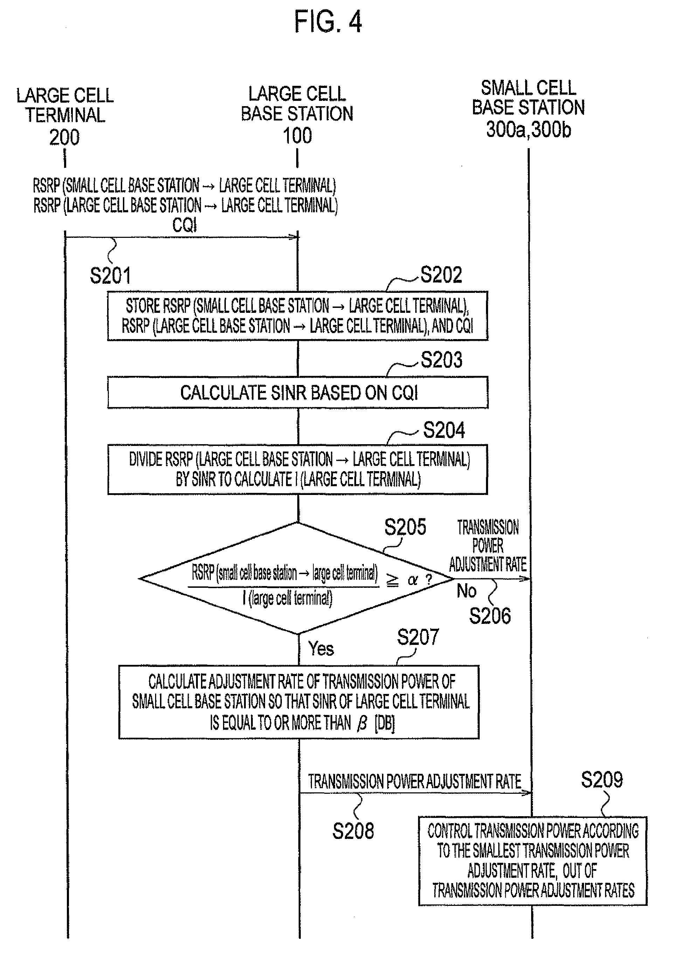

Fig. 4 is a sequence diagram illustrating a second operation example of the radio communication system 1.

In step S201, the radio terminal 200 connected to the large cell base station 100 measures the RSRP (small cell base station → large cell terminal) and the RSRP (large cell base station → large cell terminal), and transmits the measured RSRPs to the large cell base station 100. Furthermore, the radio terminal 200 calculates CQI from SINR corresponding to the measured large cell downlink and transmits the CQI to the large cell base station 100. The large cell base station 100 receives the RSRP (small cell base station → large cell terminal), the RSRP (large cell base station → large cell terminal), and the CQI.

In step S202, the large cell base station 100 stores the received RSRP (small cell base station → large cell terminal), RSRP (large cell base station → large cell terminal), and CQI. Moreover, in step S203, the large cell base station 100 calculates SINR (Signal to Interference and Noise Ratio) corresponding to the large cell downlink in the radio terminal 200 based on the stored CQI.

In step S204, the large cell base station 100 divides the RSRP (large cell base station → large cell terminal) by the SINR, thereby calculating the I (large cell terminal).

Since the operations of step S205 to step S209 are equal to the operations of step S104 to step S108 of Fig. 3, description thereof will be omitted.

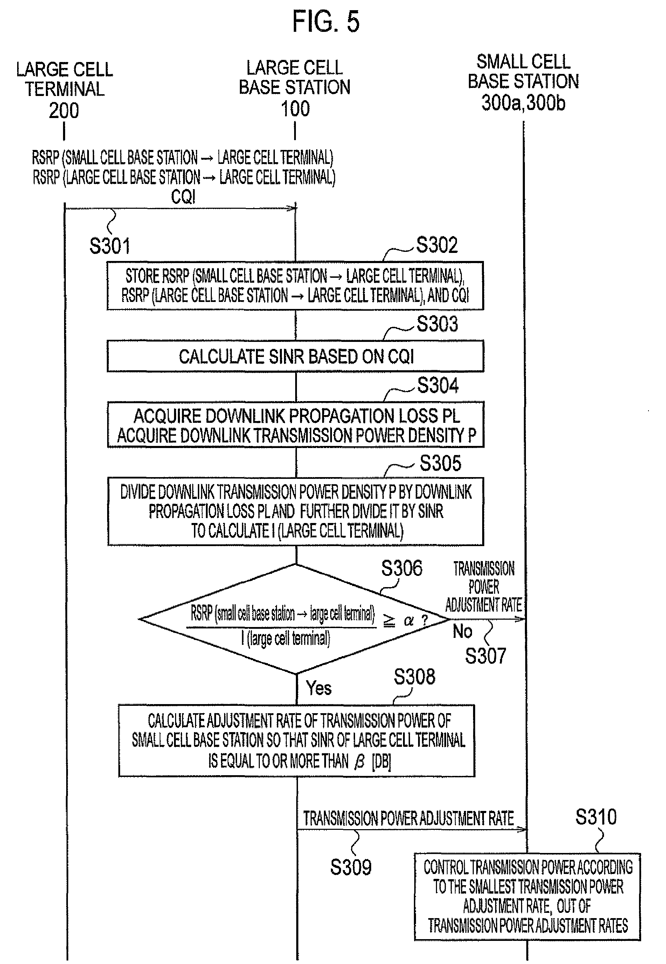

Fig. 5 is a sequence diagram illustrating a third operation example of the radio communication system 1.

In step S301, the radio terminal 200 connected to the large cell base station 100 measures the RSRP (small cell base station → large cell terminal) and the RSRP (large cell base station → large cell terminal), and transmits the measured RSRPs to the large cell base station 100. Furthermore, the radio terminal 200 calculates CQI from SINR corresponding to the measured large cell downlink and transmits the CQI to the large cell base station 100. The large cell base station 100 receives the RSRP (small cell base station → large cell terminal), the RSRP (large cell base station → large cell terminal), and the CQI.

In step S302, the large cell base station 100 stores the received RSRP (small cell base station → large cell terminal), RSRP (large cell base station → large cell terminal), and CQI. Moreover, in step S303, the large cell base station 100 calculates SINR (Signal to Interference and Noise Ratio) corresponding to the large cell downlink in the radio terminal 200 based on the stored CQI.

In step S304, the large cell base station 100 acquires downlink propagation loss PL and downlink transmission power density P. In step S305, the large cell base station 100 divides the downlink transmission power density P by the downlink propagation loss PL, and further divides a value obtained by the division by the SINR, thereby calculating the I (large cell terminal).

Since the operations of step S306 to step S310 are equal to the operations of step S104 to step S108 of Fig. 3, description thereof will be omitted.

In addition, when there exist a plurality of radio terminals connected to the large cell base station 100, the above-mentioned operations of Fig. 3 to Fig. 5 are performed for each radio terminal.

(3) Operation and Effect

In accordance with the radio communication system 1 according to the present embodiment, the large cell base station 100 calculates the small cell base station interference amount ratio which is the ratio of the RSRP (small cell base station → large cell terminal) indicating an interference amount received from the small cell base station 300 with respect to the I (large cell terminal) regarded as the total amount of interference received by the radio terminal 200 connected to the large cell base station 100. Moreover, when the small cell base station interference amount ratio is equal to or more than the threshold value α, the large cell base station 100 regards that the radio terminal 200 receives non-ignorable interference from the small cell base station 300 corresponding to the small cell base station interference amount ratio, sets the transmission power adjustment rate such that the SINR in the radio terminal 200 is equal to or more than the β [dB] which is a predetermined decibel value, and transmits the transmission power adjustment rate to the small cell base station 300.

In this way, when the small cell base station interference amount ratio corresponding to the radio terminal 200 connected to the large cell base station 100 is large and the interference in radio terminal 200 received from the small cell base station 300 is not ignorable, the transmission power of the small cell downlink in the small cell base station 300 is appropriately controlled to reduce the interference. Meanwhile, when the small cell base station interference amount ratio is small and the interference in the radio terminal 200 received from the small cell base station 300 is ignorable, the large cell base station 100 maintains or increases the transmission power of the small cell downlink in the small cell base station 300, so that it is possible to appropriately reduce the interference from the small cell base station 300 to the radio terminal 200 connected to the large cell base station 100 without reducing the communication quality of the small cell base station 300 more than necessary.

(4) Other embodiments

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

In the above-mentioned embodiment, after the large cell base station 100 transmits the transmission power adjustment rate to the small cell base station 300, the large cell base station 100 does not perform a particular process. However, in the case of assigning a resource block (a radio resource) to the radio terminal 200 after the transmission of the transmission power adjustment rate, it is preferable to assign the resource block after the transmission power adjustment rate is transmitted in consideration of the transmission delay time of the transmission power adjustment rate from the large cell base station 100 to the small cell base station 300, and then the transmission delay time has elapsed.

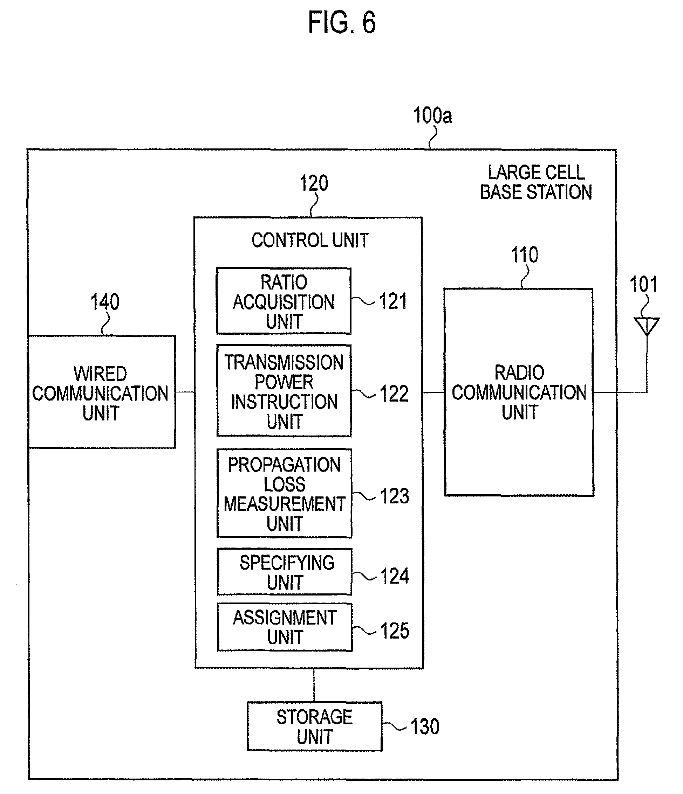

Fig. 6 is a block diagram illustrating the configuration of the large cell base station 100 that assigns a resource block in consideration of a transmission delay time. When the large cell base station 100a illustrated in Fig. 6 is compared with the large cell base station 100 illustrated in Fig. 2, the control unit 120 newly includes a specifying unit 124 and an assignment unit 125.

The specifying unit 124 specifies a transmission delay time of a signal to the small cell base station 300 which is a generation source of interference received by the radio terminal 200. When there exist a plurality of small cell base stations 300 which are generation sources of the interference received by the radio terminal 200, the transmission delay time is specified for each small cell base station 300.

For example, the transmission delay time is determined in advance and is a time (for example, 20 [ms]) at which the signal is estimated to reach the small cell base station 300 within the transmission delay time at the latest based on past statistics and the like. In this case, the transmission delay time is stored in the storage unit 130, and the specifying unit 124 reads the transmission delay time in the storage unit 130.

Otherwise, the transmission delay time is measured when a network is configured in the radio communication system 1. For example, in the LTE, at the time of the setup of an X2 connection, the large cell base station 100 transmits an "X2 SETUP REQUEST" message, and an "X2 SETUP RESPONSE" message is returned from the small cell base station 300 as a response of the message. At this time, 1/2 of the time from the transmission of the "X2 SETUP REQUEST" message to the reception of the "X2 SETUP RESPONSE" message is measured as the transmission delay time, and is stored in the storage unit 130. The specifying unit 124 reads the transmission delay time in the storage unit 130.

Otherwise, the large cell base station 100 periodically transmits a predetermined signal (for example, ping when the network 500 is a network employing TCP/IP such as LAN or the Internet) to the small cell base station 300, and receives a response signal from the small cell base station 300. The specifying unit 124 specifies 1/2 of the time from the transmission of the latest signal to the reception of a response signal as the transmission delay time. Moreover, the specifying unit 124 specifies a change in the transmission delay time based on a reception interval of a periodically transmitted message such as OI from the small cell base station 300, and corrects the transmission delay time based on the change. Specifically, the transmission delay time is corrected to be long as the reception interval of the message is long.

Otherwise, the specifying unit 124 specifies the transmission delay time based on a change in a CQI transmitted from the radio terminal 200 when the transmission power of a small cell downlink in the small cell base station 300 has been controlled. Specifically, when the transmission power of the small cell downlink in the small cell base station 300 decreases, the CQI increases than before. In this case, the specifying unit 124 specifies the time, as the transmission delay time, until the CQI is increased after the large cell base station 100 transmits the transmission power adjustment rate.

Here, an increase in the CQI than before represents the case in which the value of the CQI is larger than an immediately previous value of the CQI or a time average value of the CQI within a past predetermined period by a predetermined threshold value, or the case in which the value of SINR calculated from the CQI is larger than a predetermined target SINR. In addition, the specifying unit 124 continuously performs determination regarding an increase in the CQI by a plurality of subframes, so that it is possible to perform the determination more reliably.

The assignment unit 125 determines the passage of a time corresponding to a transmission delay time after the transmission power instruction unit 122 transmits the transmission power adjustment rate for reducing the transmission power of the small cell downlink. Here, when the transmission power instruction unit 122 has transmitted the transmission power adjustment rate to a plurality of small cell base stations 300, the assignment unit 125 determines the passage of a time corresponding to the largest transmission delay time of transmission delay times corresponding to the respective small cell base stations 300 serving as transmission destinations.

After the passage of the time corresponding to the transmission delay time after the transmission power instruction unit 122 transmits the transmission power adjustment rate for reducing the transmission power of the small cell downlink, the assignment unit 125 assigns a resource block to the radio terminal 200 receiving significant interference from the small cell base station 300. In addition, in consideration of a process time until the small cell base station 300 receives the transmission power adjustment rate, multiplies a value of the transmission power of the small cell downlink at that time point by the transmission power adjustment rate, and sets a value obtained by the multiplication as a value of the transmission power of a new small cell downlink, the assignment unit 125 may also assign a resource block to the radio terminal 200 receiving significant interference from the small cell base station 300 after the passage of a time corresponding to a time obtained by adding a transmission delay time after the transmission power adjustment rate is transmitted to the process time of the transmission power control in the small cell base station 300. In this case, the process time of the transmission power control in the small cell base station 300 is determined in advance and is stored in the storage unit 130.

As described above, when the large cell base station 100 assigns a resource block to the radio terminal 200 connected to the large cell base station 100, after the transmission power adjustment rate is transmitted to the small cell base station 300 and the transmission delay time of a signal from the large cell base station 100 to the small cell base station 300 has elapsed, the large cell base station 100 assigns a resource block to the radio terminal 200. Consequently, it is possible for the large cell base station 100 to reduce the transmission power of the small cell downlink in the small cell base station 300, and then assign a resource block to the radio terminal 200, in other words, it is possible for the large cell base station 100 to assign a resource block to the radio terminal 200 after interference is suppressed, so that it is not necessary to perform an unnecessary assignment process for assigning a resource block at which interference has occurred.

Furthermore, in the above-mentioned embodiment, the transmission power instruction unit 122 transmits the transmission power adjustment rate to the small cell base station 300. However, instead of the transmission power adjustment rate, it may be possible to transmit any one of a value of the maximum transmission power of the small cell base station 300 and a variable for determining the maximum transmission power of the small cell base station 300.

Specifically, when the small cell base station interference amount ratio is equal to or more than the threshold value α, the transmission power instruction unit 122 sets any one of the value of the maximum transmission power of the small cell base station 300 and the variable for determining the maximum transmission power of the small cell base station 300 such that the SINR in the radio terminal 200 is equal to or more than the β [dB] which is a predetermined decibel value.

Meanwhile, when the small cell base station interference amount ratio is smaller than the threshold value α, the transmission power instruction unit 122 sets an upper limit value of the transmission power in the small cell base station 300 as the value of the maximum transmission power. Otherwise, the transmission power instruction unit 122 sets a variable for determining the upper limit value of the transmission power in the small cell base station 300 as the variable for determining the maximum transmission power of the small cell base station 300.

Moreover, the transmission power instruction unit 122 transmits any one of the value of the maximum transmission power of the small cell base station 300 and the variable for determining the maximum transmission power of the small cell base station 300 to the corresponding small cell base station 300 via the wired communication unit 140 and the core network 500.

When the value of the maximum transmission power has been received from the transmission power instruction unit 122, the small cell base station 300 sets a power value equal to or less than the value of the maximum transmission power as a value of the transmission power of a new small cell downlink. Furthermore, when the variable for determining the maximum transmission power is received from the transmission power instruction unit 122, the small cell base station 300 sets a power value equal to or less than the value of the maximum transmission power determined by the variable as the value of the transmission power of the new small cell downlink.

In the above-mentioned embodiment, the large cell base station 100 compares the small cell base station interference amount ratio with the threshold value α, and sets the transmission power adjustment rate, the value of the maximum transmission power of the small cell base station 300, and the variable for determining the maximum transmission power of the small cell base station 300 according to the comparison result. However, without comparing the small cell base station interference amount ratio with the threshold value α, the large cell base station 100 may also give an instruction to a corresponding small cell base station 300 such that the transmission power of a small cell downlink in the corresponding small cell base station 300 is reduced as the small cell base station interference amount ratio is increased.

Furthermore, in the above-mentioned embodiment, the large cell base station 100 performs the calculation of the small cell base station interference amount ratio, and the instruction of the transmission power adjustment to the small cell base station 300. However, the upper device 400 may also perform the calculation and the instruction.

In this case, the upper device 400 includes the ratio acquisition unit 121 and the transmission power instruction unit 122 in the control unit. The upper device 400 receives the RSRP (small cell base station → large cell terminal) or the CQI from the small cell base station 300 via the large cell base station 100, and receives downlink propagation loss from the large cell base station 100. Moreover, the ratio acquisition unit 121 calculates the small cell base station interference amount ratio by appropriately using the RSRP (small cell base station → large cell terminal), the CQI, and the downlink propagation loss, and the transmission power instruction unit 122 sets the transmission power adjustment rate, the value of the maximum transmission power of the small cell base station 300, and the variable for determining the maximum transmission power of the small cell base station 300 based on the small cell base station interference amount ratio, and transmits the set transmission power adjustment rate, value, and variable to the small cell base station 300. Furthermore, the large cell base station 100 may set the transmission power adjustment rate, the value of the maximum transmission power of the small cell base station 300, and the variable for determining the maximum transmission power of the small cell base station 300, and the upper device 400 may transmit the notified transmission power adjustment rate, value of the maximum transmission power of the small cell base station 300, and variable for determining the maximum transmission power of the small cell base station 300 to the small cell base station 300.

Thus, it must be understood that the present invention includes various embodiments that are not described herein. Therefore, the present invention is limited only by the specific features of the invention in the scope of the claims reasonably evident from the disclosure above,

The entire contents of Japanese Patent Application No. 2009-231030 (filed on October 2, 2009) and Japanese Patent Application No. 2009-251666 (filed on November 2, 2009) are incorporated in the present specification by reference.

## INDUSTRIAL APPLICABILITY

The radio communication system, the large cell base station, and the communication control method of the present invention can appropriately reduce interference from a small cell base station to a radio terminal connected to a large cell base station, and are available for a radio communication system and the like.

**Claims**

1. A radio communication system, in which a small cell base station forming a small cell smaller than a large cell formed by a large cell base station is installed in the large cell and a radio terminal is connected to the large cell base station, wherein
a network device including at least one of the large cell base station and an upper device of the large cell base station comprises:

   a ratio acquisition unit configured to acquire a ratio of an interference amount received from the small cell base station with respect to a first interference amount regarded as a total amount of interference received by the radio terminal; and
   an instruction unit configured to give an instruction for controlling transmission power of a small cell downlink, which is a downlink in the small cell base station, to the small cell base station based on the ratio acquired by the ratio acquisition unit.

2. The radio communication system according to claim 1, wherein the instruction unit gives the instruction for controlling the transmission power of the small cell downlink to the small cell base station such that communication quality of a downlink from the large cell base station to the radio terminal reaches a predetermined value.

3. The radio communication system according to claim 1, wherein, the instruction unit gives an instruction for reducing the downlink transmission power to the small cell base station, when the ratio acquired by the ratio acquisition unit exceeds a predetermined threshold value.

4. The radio communication system according to claim 1, wherein the ratio acquisition unit acquires received power of a reference signal from the small cell base station in the radio terminal, and acquires a ratio of the received power of the reference signal with respect to the first interference amount.

5. The radio communication system according to claim 1, wherein the ratio acquisition unit calculates the first interference amount by adding thermal noise power to received power of a reference signal in the radio terminal, the reference signal transmitted from the small cell base station and a large cell base station other than the large cell base station to which the radio terminal has been connected.

6. The radio communication system according to claim 1, wherein the ratio acquisition unit calculates the first interference amount by dividing received power of a reference signal from the large cell base station in the radio terminal by a signal to noise power ratio corresponding to CQI from the radio terminal.

7. The radio communication system according to claim 1, wherein the ratio acquisition unit calculates the first interference amount by dividing transmission power density of a large cell downlink, which is a downlink in the large cell base station, by propagation loss of the large cell downlink, and further dividing a divided result by a signal to noise power ratio corresponding to CQI from the radio terminal.

8. The radio communication system according to claim 1, comprising:

   a specifying unit configured to specify a transmission delay time of a signal from the instruction unit to the small cell base station; and
   an assignment unit configured to assign a radio resource to the radio terminal after the transmission delay time, from the instruction for controlling the transmission power of the small cell downlink to the small cell base station is made by the instruction unit, has elapsed..

9. The radio communication system according to claim 8, wherein the specifying unit specifies the transmission delay time based on a duration between a transmission of a predetermined signal to the small cell base station and a reception of a response signal from the small cell base station.

10. The radio communication system according to claim 9, wherein the specifying unit corrects the transmission delay time based on a reception interval of a signal which is periodically transmitted from the small cell base station.

**11.** The radio communication system according to claim 8, wherein the specifying unit specifies the transmission delay time based on a change in CQI which is transmitted from the radio terminal when the small cell base station controls the transmission power of the small cell downlink.

**12.** The radio communication system according to claim 1, wherein the instruction unit transmits any one of a value of maximum transmission power of the small cell base station and a variable for determining the maximum transmission power of the small cell base station, to the small cell base station.

**13.** A large cell base station forming a large cell, a small cell base station forming a small cell smaller than the large cell being installed in the large cell, a radio terminal being connected to the large cell base station, the large cell base station comprising:

a ratio acquisition unit configured to acquire a ratio of an interference amount received from the small cell base station with respect to a first interference amount regarded as a total amount of interference received by the radio terminal; and
an instruction unit configured to give an instruction for controlling transmission power of a small cell downlink, which is a downlink in the small cell base station, to the small cell base station based on the ratio acquired by the ratio acquisition unit.

**14.** A communication control method in a large cell base station forming a large cell, a small cell base station forming a small cell smaller than the large cell being installed in the large cell, a radio terminal being connected to the large cell base station, the communication control method comprising:

a step of acquiring, by the large cell base station, a ratio of an interference amount received from the small cell base station with respect to a first interference amount regarded as a total amount of interference received by the radio terminal; and
a step of giving, by the large cell base station, an instruction for controlling transmission power of a small cell downlink, which is a downlink in the small cell base station, to the small cell base station based on the acquired ratio.

# FIG. 1

# FIG. 2

# FIG. 3

LARGE CELL TERMINAL 200     LARGE CELL BASE STATION 100     SMALL CELL BASE STATION 300a,300b

RSRP (SMALL CELL BASE STATION → LARGE CELL TERMINAL)
RSRP (ANOTHER LARGE CELL BASE STATION → LARGE CELL TERMINAL)
RSRP (LARGE CELL BASE STATION → LARGE CELL TERMINAL)

S101

S102

STORE RSRP (SMALL CELL BASE STATION → LARGE CELL TERMINAL),
RSRP (ANOTHER LARGE CELL BASE STATION → LARGE CELL TERMINAL),
AND RSRP (LARGE CELL BASE STATION → LARGE CELL TERMINAL)

S103

ADD THERMAL NOISE POWER TO SUM VALUE OF
RSRP (SMALL CELL BASE STATION → LARGE CELL TERMINAL) AND
RSRP (ANOTHER LARGE CELL BASE STATION → LARGE CELL TERMINAL)
TO CALCULATE I (LARGE CELL TERMINAL)

S104     TRANSMISSION POWER ADJUSTMENT RATE

$$\frac{\text{RSRP (small cell base station} \rightarrow \text{large cell terminal)}}{\text{I (large cell terminal)}} \geq \alpha \ ?$$

No

S105

Yes     S106

CALCULATE ADJUSTMENT RATE OF TRANSMISSION POWER OF
SMALL CELL BASE STATION SO THAT SINR OF LARGE CELL TERMINAL
IS EQUAL TO OR MORE THAN $\beta$ [DB]

TRANSMISSION POWER ADJUSTMENT RATE     S108

S107

CONTROL TRANSMISSION POWER ACCORDING
TO THE SMALLEST TRANSMISSION POWER
ADJUSTMENT RATE, OUT OF
TRANSMISSION POWER ADJUSTMENT RATES

# FIG. 4

```
LARGE CELL              LARGE CELL              SMALL CELL
TERMINAL              BASE STATION           BASE STATION
  200                    100                    300a,300b
   |                      |                        |
```

RSRP (SMALL CELL BASE STATION → LARGE CELL TERMINAL)
RSRP (LARGE CELL BASE STATION → LARGE CELL TERMINAL)
CQI

S201 ⟩              S202

| STORE RSRP (SMALL CELL BASE STATION → LARGE CELL TERMINAL), RSRP (LARGE CELL BASE STATION → LARGE CELL TERMINAL), AND CQI |

S203

| CALCULATE SINR BASED ON CQI |

S204

| DIVIDE RSRP (LARGE CELL BASE STATION → LARGE CELL TERMINAL) BY SINR TO CALCULATE I (LARGE CELL TERMINAL) |

S205

TRANSMISSION
POWER
ADJUSTMENT RATE

$$\frac{\text{RSRP (small cell base station → large cell terminal)}}{\text{I (large cell terminal)}} \geq \alpha \ ?$$

No
S206

Yes        S207

| CALCULATE ADJUSTMENT RATE OF TRANSMISSION POWER OF SMALL CELL BASE STATION SO THAT SINR OF LARGE CELL TERMINAL IS EQUAL TO OR MORE THAN $\beta$ [DB] |

TRANSMISSION POWER ADJUSTMENT RATE          S209

S208

| CONTROL TRANSMISSION POWER ACCORDING TO THE SMALLEST TRANSMISSION POWER ADJUSTMENT RATE, OUT OF TRANSMISSION POWER ADJUSTMENT RATES |

# FIG. 5

| LARGE CELL TERMINAL 200 | LARGE CELL BASE STATION 100 | SMALL CELL BASE STATION 300a,300b |

RSRP (SMALL CELL BASE STATION → LARGE CELL TERMINAL)
RSRP (LARGE CELL BASE STATION → LARGE CELL TERMINAL)
CQI

S301

S302

STORE RSRP (SMALL CELL BASE STATION → LARGE CELL TERMINAL), RSRP (LARGE CELL BASE STATION → LARGE CELL TERMINAL), AND CQI

S303

CALCULATE SINR BASED ON CQI

S304

ACQUIRE DOWNLINK PROPAGATION LOSS PL
ACQUIRE DOWNLINK TRANSMISSION POWER DENSITY P

S305

DIVIDE DOWNLINK TRANSMISSION POWER DENSITY P BY DOWNLINK PROPAGATION LOSS PL AND FURTHER DIVIDE IT BY SINR TO CALCULATE I (LARGE CELL TERMINAL)

S306

$$\frac{\text{RSRP (small cell base station} \to \text{large cell terminal)}}{\text{I (large cell terminal)}} \geq \alpha \ ?$$

TRANSMISSION POWER ADJUSTMENT RATE

No

S307

Yes

S308

CALCULATE ADJUSTMENT RATE OF TRANSMISSION POWER OF SMALL CELL BASE STATION SO THAT SINR OF LARGE CELL TERMINAL IS EQUAL TO OR MORE THAN $\beta$ [DB]

TRANSMISSION POWER ADJUSTMENT RATE

S310

S309

CONTROL TRANSMISSION POWER ACCORDING TO THE SMALLEST TRANSMISSION POWER ADJUSTMENT RATE, OUT OF TRANSMISSION POWER ADJUSTMENT RATES

# FIG. 6

100a

LARGE CELL
BASE STATION

120

## CONTROL UNIT

| RATIO ACQUISITION UNIT | ~ 121 |

| TRANSMISSION POWER INSTRUCTION UNIT | ~ 122 |

| PROPAGATION LOSS MEASUREMENT UNIT | ~ 123 |

| SPECIFYING UNIT | ~ 124 |

| ASSIGNMENT UNIT | ~ 125 |

140

WIRED COMMUNICATION UNIT

110

101

RADIO COMMUNICATION UNIT

STORAGE UNIT ~ 130

## INTERNATIONAL SEARCH REPORT

| International application No. |
| --- |
| PCT/JP2010/067282 |

A.  CLASSIFICATION OF SUBJECT MATTER
*H04W52/24*(2009.01)i, *H04W84/10*(2009.01)i

According to International Patent Classification (IPC) or to both national classification and IPC

B.  FIELDS SEARCHED

Minimum documentation searched (classification system followed by classification symbols)
H04W4/00-99/00

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | WO 2009/119212 A1  (NEC Corp.),<br>01 October 2009 (01.10.2009),<br>paragraphs [0120] to [0130], [0138]<br>(Family: none) | 1-14 |
| A | WO 2008/093100 A2  (UBIQUISYS LTD.),<br>07 August 2008 (07.08.2008),<br>claims 1 to 5, 9, 10<br>& JP 2010-518668 A       & US 2008/0188265 A1<br>& GB 2447439 A           & EP 2119031 A2<br>& CN 101652935 A | 1-14 |
| A | WO 2009/072355 A1  (NEC Corp.),<br>11 June 2009 (11.06.2009),<br>paragraphs [0057] to [0058]<br>& EP 2219393 A1 | 1-14 |

☐  Further documents are listed in the continuation of Box C.        ☐   See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>        09 November, 2010 (09.11.10) | Date of mailing of the international search report<br>        22 November, 2010 (22.11.10) |
| --- | --- |
| Name and mailing address of the ISA/<br>     Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009231030 A

- JP 2009251666 A

**Non-patent literature cited in the description**

- Analysis of HNB Coverage and HNB Interference to Macro UE for Enhanced Interference Management. *3GPP RAN-WG4 R4-092063*